# EUROPEAN PATENT APPLICATION

(11) **EP 1 508 272 A1**
(43) Date of publication of application: **23.02.2005**
(21) Application number: 03077611.6
(22) Date of filing: 21.08.2003
(51) Int. Cl.: A01K 61/02, A01K 61/00, C12M 1/00, A01K 63/04

(54) **Bioreactor system for the cultivation of aquatic organisms**

(71) Applicant: Osinga, Ronald, 6700 EV Wageningen (NL)
(72) Inventor: Osinga, Ronald, 6700 EV Wageningen (NL)
(74) Representative: van Westenbrugge, Andries

(57) **Abstract**

The present invention relates to a bioreactor system for the cultivation of aquatic organisms using enriched water, wherein the system comprises separate enclosures for the enrichment of the water and food production on the one hand and the cultivation of the organisms on the other hand. Separated food production has several advantages. It enables two features that are needed to establish an efficient culture. In the first place, it enables control of the concentration of suspended food in the enclosure with the organisms. In the second place, it enables high-density culture. In addition, a partitioned system allows pretreatment of the produced food before it is supplied to the organisms. Furthermore, the system according to the present invention allows that water from the enclosure containing the organisms may be used as medium for the food production enclosure. In this way, a significant reduction of the amount of water that is used may be achieved, and no water needs to be discharged.

## Description

### Field of the invention

The present invention relates to a bioreactor system for culturing aquatic organisms. In particular it relates to a bioreactor system that is a partitioned aquaculture system.

### Background of the invention

Since many years there is commercial interest in aquatic organisms in general and in marine invertebrates in particular due to ability of many of these organisms to produce natural compounds that may be used as pharmaceuticals. These compounds are usually secondary metabolites, which are produced in low amounts by the organism. Development of these natural compounds to pharmaceuticals is often hampered by a supply problem: there is not enough biological material available to complete the development research. Many aquatic organisms are rare and difficult to collect on a large scale. In addition, many aquatic organisms are difficult to culture efficiently on a large scale. This is in particular the case for filterfeeding invertebrate animals. These are animals that feed on suspended particulate organic matter and on dissolved organic matter that is filtered out of the surrounding water.
In many cases, the only existing method to culture these animals is sea-based aquaculture: growing the animals in their natural environment (see for instance Pronzato et al. 1999, Duckworth et al. 1999). Due to unpredictable and uncontrollable circumstances that prevail outdoors, sea-based aquaculture is a technique with a high risk factor. Besides, it is often hard to find a location that is suitable for setting up an aquaculture system.

Sea-based aquaculture of filterfeeding invertebrates can be improved by putting the culture on locations that are enriched with nutrients, such as areas around fish farms. An example of such a system, the Maribattery, is described by Schatton et al. (German patent DE 198 34 949 A 1). In this system, marine sponges were grown. Growth of the sponges in the Maribattery was enhanced when compared to natural growth rates. However, the animals in these systems are still subjected to uncontrollable factors such as diseases, variable temperatures, losses due to damage, etc.

Land-based aquaculture in controllable closed and half-open systems is a commonly used alternative to sea-based culture. A wide variety of land-based systems have been applied to culture fish, shrimp and several of other marine animals. Some of the devices described in literature consist of two or more separate enclosures for pre-treatment of the natural seawater that is used in the system and/or biofiltration (cleaning) of the water in the system. For example, Craig and Beede (US patent 5,377,624) describe a culture system for abalones that comprises a water holding tank in which sterilization and temperature control of natural seawater takes place, and a cascade of culture tanks in which the different life stages of the abalones are cultured separately.

In comparison to sea-based culture, land-based systems have the advantage that extra food can be efficiently provided to the animals in the culture. Common aquaculture feeds are usually solid, visible particles, for instance dried foods or cultured mesozooplankton. This food is suitable for animals with eyes and locomotive capabilities such as fish and shrimp, which can actively ingest these larger food particles. It is not suitable to most filterfeeders, which are sessile and feed upon microscopic particles.

Some systems use the natural food chain to feed the animals in the culture. In these so-called "Greenwater systems" (see for instance: Corre et al, 2000 or: www.aquaponics .com/articlegreenwater.htm), growth of algae (both macroalgae and microalgae) is augmented by providing nutrients such as phosphate and nitrate to the water in the system. These systems are not suitable for the high-density culture of filterfeeders such as sponges.

Some authors describe systems that consist of a cascade of photobioreactors and enclosures containing sponges. Although limited growth of sponges in such systems has been demonstrated (see for instance Osinga et al. 2003), they have several disadvantages: they are laborious, consume a lot of water and provide a very narrow diet to the target animals (consisting of only a limited number of microorganism species), which may cause deficiencies in the animals.

Barthel and Theede (1986) used a half open system, in which they combined a flow of natural seawater with addition of cultured algae (batch cultures of the green microalga *Chlorella vulgaris*) to culture a marine sponge. Similar to this system is an invention described by Kepenyes et al. (FR 2 637 457 A1), which describes a culture device for crustaceans and fish, which uses natural seawater. This system comprises separate units for filtration and aeration of the water before it flows to the culture tanks. Extra food is supplied among others by addition of cultured microalgae. Although these systems showed advantages over sea-based aquaculture (improved growth rates), they are still vulnerable to external effects and seasonality. In addition, supply of monocultures of algae may lead to deficiencies when unselectively feeding filterfeeders are cultured.

Currently, there is no land-based aquaculture system in which an appropriate feed for filterfeeding animals such as sponges can be continuously provided at an optimal level in an efficient way.

### Description of the invention

The present invention relates to a bioreactor system for the cultivation of aquatic organisms using enriched water, wherein the system comprises separate enclosures for the enrichment of the water and the cultivation of the organisms.

In one embodiment, the bioreactor systems comprises: (i) one or more enclosures A wherein the enrichment of the water is effected and (ii) an enclosure C which contains the animals and which is connected to enclosure A.

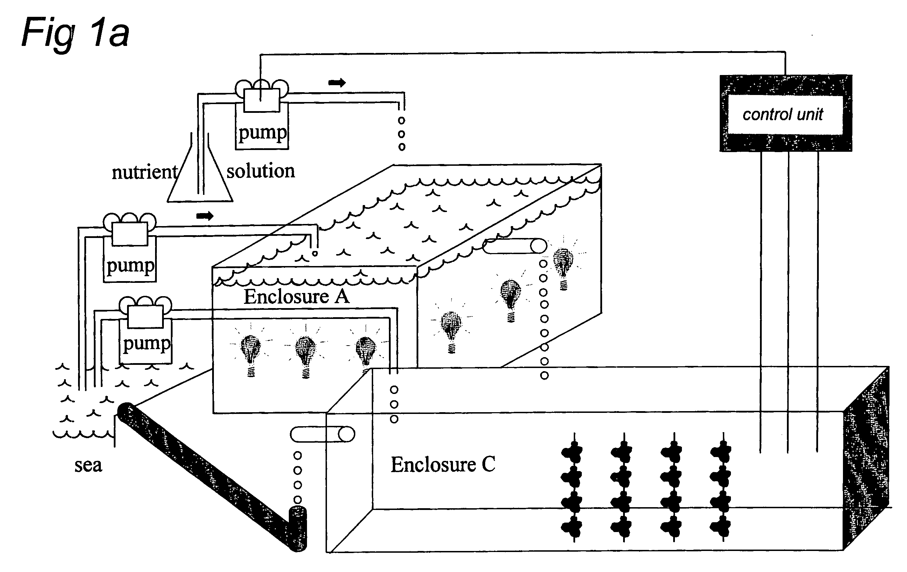

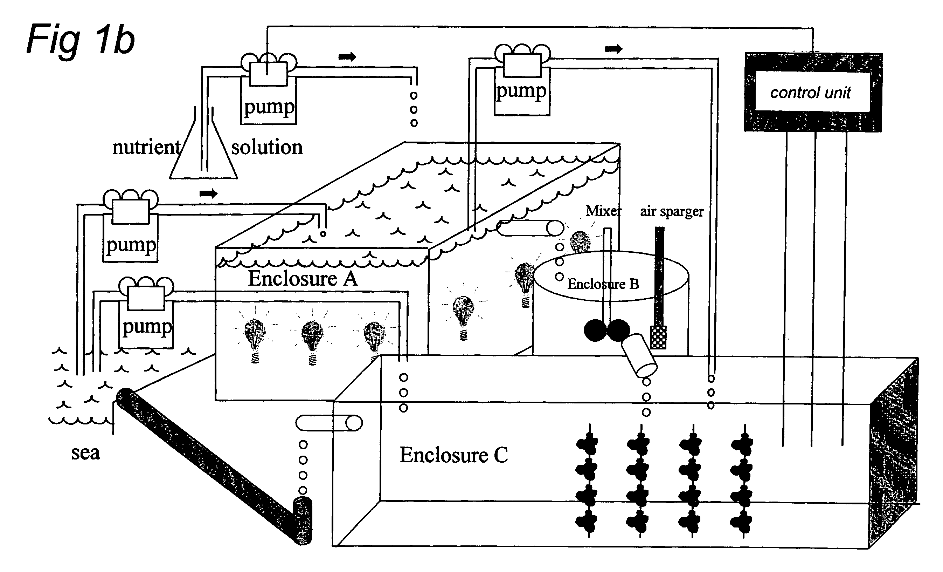

The system may be half open, so that enclosures A and C both have a connection to an external water mass, for example as depicted in Fig. 1A and 1B. Both salt water, brackish water and freshwater may be used as the external water mass. The external water mass may , e.g. be formed by a natural water source such as the sea, a river or a lake. Alternatively, the external water mass may be man-made water masses, such as large aquariums, and aquaculture systems. While the water in natural water sources is implicitly of natural origin, the water in man-made water masses is either natural or artificial. Artificial water is generally of a well-defined composition and is prepared by adding known amounts of salts and additives such as vitamins to water of a defined quality, such as tap water, demineralised water or distilled water. In one embodiment, artificial seawater with a salinity of about 30-40‰ is used in a bioreactor system of the invention. The phrase "seawater" refers to water with a salinity of at least about 25‰, preferably its salinity is between about 25 and 40‰.

Alternatively, the system may be closed, i.e. enclosures A and C have no connection to external water masses. A closed system according to the present invention has the advantage that water from the enclosure containing the organisms may be used as medium for the food production enclosure. The only thing added to the system is a very small volume of water containing concentrated medium components. This water input is smaller than the amount of water that is lost from the system due to evaporation. In this way, a significant reduction of the amount of water that is used may be achieved, and no water needs to be discharged.

The advantage of the novel bioreactor system described herein is that it provides a solution to the supply problem of many marine natural products by enabling controlled production of biomass of the organisms that produce these compounds. This is achieved by applying a novel feeding strategy that is specifically suitable for filterfeeders. In this context, the term "filterfeeders" refers to organisms that unselectively feed upon suspended small organic particles such as microalgae, bacteria, detritus (dead particulate organic matter) and on dissolved organic compounds. The bioreactor system is able to supply a mixture of these food components in adequate amounts to the organisms in culture.

In a preferred embodiment the filterfeeders are aquatic animals, preferably invertebrate aquatic animals, such as sponges.

Food production and cultivation of the animals is done in separate enclosures. This makes these bioreactor systems different from greenwater systems, in which enrichment of the water takes place in the enclosure with the cultured animals. Separated food production enables two features that are needed to establish an efficient filterfeeder culture.

In the first place, it enables control of the concentration of suspended food in the enclosure with the target animals. Filterfeeding animals, such as sponges, only function well within a rather narrow range of food concentrations in the water surrounding the animals (see for instance Osinga et al. 2001). The level must be high enough to sustain the nutritional demands of the animals (lower threshold value). However, when the food level becomes too high (upper threshold value), filterfeeders reduce their feeding activities. A reduced feeding activity will lead to a further increase of the suspended food level, thus further reducing the feeding activity, so that the system becomes out of balance. The systems described according to the invention can be controlled in such a way that the suspended food level in enclosure C will never exceed the upper threshold value. This is achieved by continuous monitoring of the suspended food concentration, for instance by online measurement of Total Organic Carbon (TOC), which can be done by spectrometry or by wet oxidation analysis. When the carbon concentration reaches the upper threshold value, the food supply to enclosure C is stopped by switching off the pump that generates the flow from enclosure C to enclosure A (closed system) or the flow from open water into enclosure A (half open system). When the lower threshold level is reached, the food production can be increased by supplying higher concentrations of nutrients to enclosure A.

In the second place, it enables high-density culture. In the cultures, a large ratio between animal volume and water volume is preferred from an economical point of view. Under the circumstances of a high load of animals, the total filtering activity of the animals is too high to allow growth of microorganisms in the water surrounding the animals. Co-culturing of microorganisms with filterfeeding animals can only be done when the ratio between animal volume and water volume is low. High-density culture of filterfeeders can therefore best be done in systems in which food production is separated from the enclosure containing the animals.

Another advantage is that the enrichment used can be unselective. By enriching a mixed population of microorganisms, a natural diet for the cultured animals is mimicked and brought up to the level that promotes growth of the target animals most optimally.

The enclosures may be made of any material that is non-toxic to marine invertebrates. Suitable examples include but are not limited to glass, plexiglass, PVC, polypropylene and polyesters.

In enclosure A, life food for the cultured animals is produced by enrichment. Thereto, enclosure A is inoculated with water that contains a mixed population of micro-, nano- and picoplankton, for instance natural seawater or natural freshwater. The inoculum may be supplemented with defined cultures of either phototrophic or heterotrophic microorganisms. Alternatively, enclosure A is inoculated only with one or more defined cultures of either phototrophic or heterotrophic microorganisms. More than one enclosure of the type A can be run in parallel using different strategies for inoculation and enrichment in each enclosure. This has several advantages. For example, the heterogeneity of the diet may be optimised. In addition to this, the extra enclosures serve as a backup in case that one of the enclosures of the type A is not functioning properly and has to be restarted. The term "parallel" herein means that all enclosures of the type A are similarly connected to enclosure C.

In this context, "enrichment" refers to the stimulation of the growth of plankton. This may suitably be done by stimulating the growth of phototrophic plankton, or by stimulating the growth of heterotrophic plankton or by stimulating both phototrophic and heterotrophic growth simultaneously.

Phototrophic plankton is stimulated by adding concentrated solutions of medium components into enclosure A and by providing light to enclosure A. The skilled person will understand that in this case, enclosure A is made of glass or plexiglass, or is open on the upside if made of any non-transparent material. Medium components added are carbon (CO₂), nitrogen (for instance nitrate, ammonium, urea, amino acids), phosphate, trace elements and silicate. In closed systems, medium components that are not toxic to the animals in enclosure C when supplied in the concentrations needed for microorganisms to grow, such as silicate and iron, can be added to enclosure C and will enter enclosure A with the inflowing stream from enclosure C.

Heterotrophic plankton is stimulated by adding to enclosure A any organic carbon source that promotes growth of heterotrophs and that is not toxic to marine invertebrates, together with other medium components that are needed for heterotrophic growth. Suitable examples include a combination of glucose and glutamine, yeast extract and fish extract.

Enclosure A is equipped with a mixing device, for instance airlift mixing, magnetic stirring or mechanical stirring, in order to keep the produced food particles in suspension.

Enclosure C is used to maintain the cultured animals. Any type of tank may be used as an enclosure C, for example a raceway tank, a stirred tank, or an airlift reactor. The enclosure is preferably temperature controlled.

In the case of a closed system, enclosure C must be equipped with a water quality control system in order to control the pH, the salinity and the levels of contamination such as nitrate and organic waste products in the water. It is essential hereby to apply a system that is not using mechanical filtration (i.e. no external loops with filters that remove particulate organic matter from the water should be applied), because such systems will rapidly remove a substantial part of the food for filterfeeding organisms (particulate organic matter) from the water. Water quality control systems suitable for the culture principles described here are for instance the DYMICO system of EcoDeco BV (patent application WO 02/069701), the plenum system of Jaubert (US Patent 4,995,980) or any other system that is not using mechanical filtration.

Naturally produced organic matter, such as the material produced in enclosure A usually consists of a rapidly degradable fraction, which can be consumed by aerobic, heterotrophic microorganisms within a few days, and a resistant fraction of compounds that retain in aerobic waters for months or years (see for instance Osinga et al., 1997).

Optionally, enclosure C is connected to enclosure(s) A by an enclosure B that is a dark, stirred and/or aerated tank. In enclosure B, the ageing of the enriched water from enclosure(s) A takes place. Ageing refers to the treatment of the water wherein aerobic bacterial degradation of the organic material produced in enclosure A takes place, thus removing most of the rapidly degradable materials. Ageing and is done to produce water that is rich in resistant organic matter. In this way, a condition is created that mimics the natural nutritional conditions of many marine filterfeeders, who are surrounded by water containing only few living organic particles and large reservoir of mainly dissolved, resistant organic matter. Many marine filterfeeders must be adapted to such conditions and may be vulnerable to conditions when organically rich food (i.e., the rapidly degradable fraction) is abundant in the surrounding water. Under the latter conditions, filterfeeders are likely to become overgrown by opportunistic organisms such as fungi and bacteria, which use the organically rich food more efficiently.

In one embodiment, the enriched water from enclosure A is subjected to pre-ageing treatment before it enters enclosure B, in order to facilitate the ageing process of the enriched water produced in enclosure A. Any treatment which disrupts the cell walls of the microorganisms present in the enriched water from enclosure A is suitable as pre-ageing treatment. Suitable examples of pre-ageing treatments include, but are not limited to freezing and thawing of the water and ultrasonic treatment.

Figure 1A and 1B show two embodiments of a half open system. Natural seawater or freshwater is pumped from open water into enclosure A. The effluent of enriched water from enclosure A is led into enclosure C via an overflow (gravity). In the embodiment that includes an ageing enclosure B, all or part of the effluent of enriched water from enclosure A is led into enclosure B via an overflow, and subsequently, the effluent from enclosure B is led via an overflow into enclosure C. The effluent of enclosure C is discharged back into the open water. The half-open system also has a connection between the open water and enclosure C, through which water can be pumped actively from the open water into enclosure C.

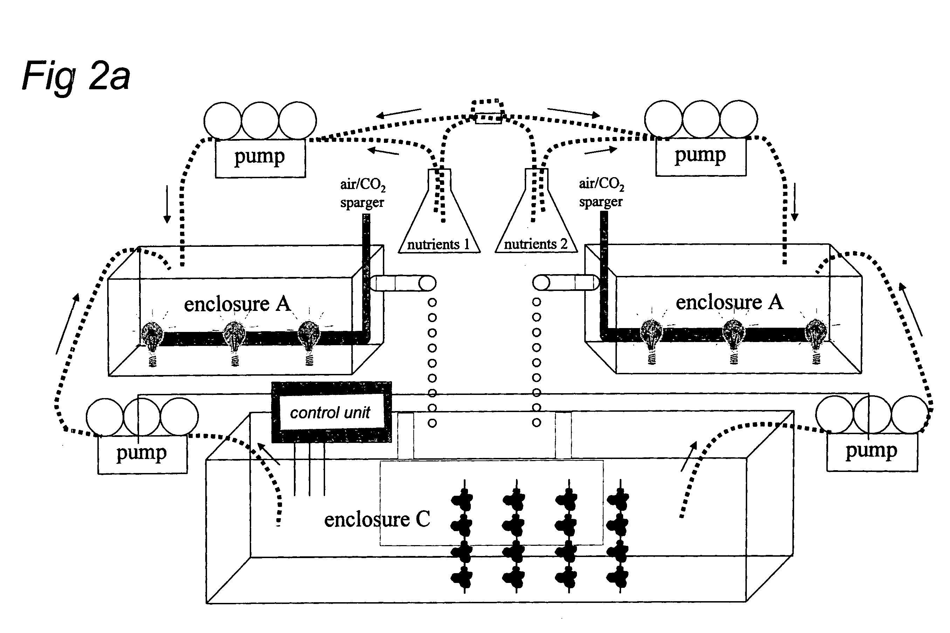

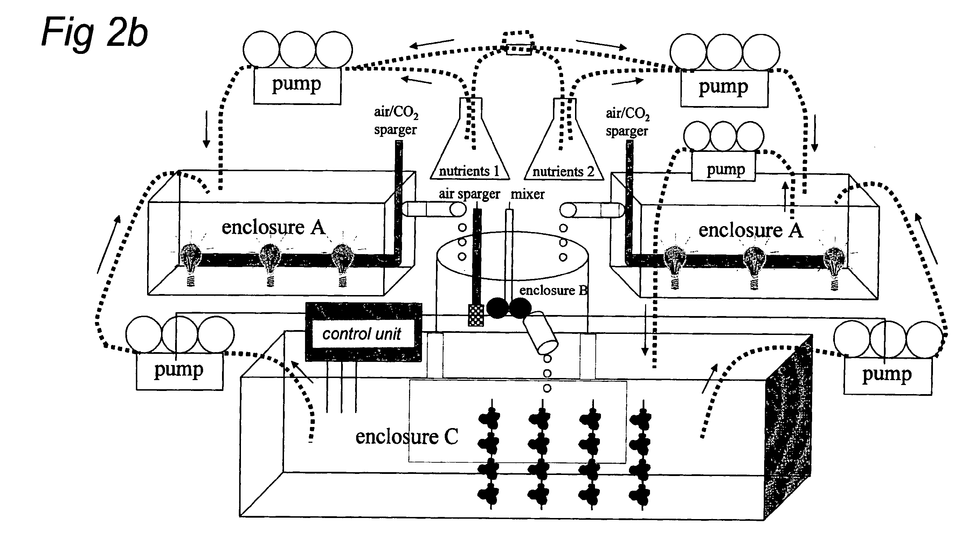

Figure 2A and 2B show two embodiments of a closed system Enclosure C is connected to enclosure A and water is actively pumped from enclosure C into enclosure A. The effluent of enriched water from enclosure A is led into enclosure C via an overflow (gravity). In the embodiment that includes an ageing enclosure B, all or part of the effluent of enriched water from enclosure A is led into enclosure B via an overflow and subsequently, the effluent from enclosure B is led via an overflow into enclosure C.

The pump can also be positioned between enclosures A and B (with gravity overflows between B and C and between C and A), between enclosures B and C (with gravity overflows between A and B and between C and A) or between enclosures A and C (with a gravity overflow between C and A) in case that the bioreactor system is operated without an ageing enclosure. The closed system has no connections to open water.

Organic matter sometimes forms larger aggregates, which are not suitable as food for filterfeeders and which can clog parts of the system. To remove these particles, the bioreactor system according to the invention may also comprise one or more devices to reduce the size of aggregates that are formed in any one of the enclosures. In one embodiment, size reduction is achieved by using filters, preferably stirred filters. In the case of closed systems, the filters are implemented in the connections between enclosures A and C, and/or between enclosures A and B, and B and C. In the case of half-open systems, the filters are implemented in the connections between the open water and enclosure A and/or between enclosure A and B, and B and C.

Stirred filters consist of a pipe in which a mesh is mounted. The pore size of the mesh must be large enough to let microorganisms pass through (for instance a nylon gauze with a pore size of 50 µm). On the mesh, a magnetic stirrer bar is placed. The filter pipe is placed on a magnetic stirrer, so that the stirrer bar presses the particles through the mesh. The filtered water is led into the next enclosure.

The system may be operated in a continuous mode. In a closed system operated in a continuous mode, a continuous flow from enclosure C into enclosure A is maintained together with a continuous addition of medium components and/or light to enclosure A. The water flow from enclosure C to enclosure A is generated by a pump, for instance a peristaltic pump. Concentrated solutions with medium components are continuously added to enclosure A by using for instance a peristaltic pump. CO₂ can be added to enclosure A by sparging compressed air (eventually enriched with CO₂) through the water in the enclosure. The enriched water flows back from enclosure A to enclosure C via an overflow. In the case that the system is equipped with an extra enclosure B, all or part of the overflow water from enclosure A is either led into reactor B or collected for intermediate treatment before it is added to reactor B. Reactor B has an overflow through which the enriched and aged water flows back into enclosure C.

Alternatively, the system may be operated in a semi-continuous mode. In a semi-continuously (manually) operated closed system, there is a regular exchange of all or part of the volume of enclosure A with water from enclosure C and a corresponding addition of concentrated solutions with medium components to enclosure A. Light is provided continuously or in light dark rhythms. The water that is taken out of enclosure A is added to enclosure C.

If the system is equipped with an extra enclosure B, all or part of the water taken out of enclosure A is either added to enclosure B or collected for intermediate treatment before it is added to enclosure B. A water volume of corresponding size is taken from enclosure B to enclosure C.

In analogy to the closed system, the half-open system may also be operated in a continuous mode or in a semi-continuous mode. All water volumes can be filtered to remove bigger aggregates before being added to another enclosure.

In another aspect, the present invention relates to a method for the cultivation of aquatic organisms comprising cultivating the organisms in a bioreactor system according to the invention. Preferably, the aquatic organisms are filterfeeding organisms, especially filterfeeding animals. Most preferred are invertebrate filterfeeding animals, in particular the marine animals, which include animals such as bryozoans, bivalves, ascidians and filterfeeding crustaceans, such as barnacles. In one embodiment, the invention is used for the cultivation of sponges. Preferably, it is used for the cultivation of Mediterranean sponges. Most preferably, it is used for the cultivation of *Dysidea avara, Chondrosia reniformis, Axinella polypoides* or *Crambe crambe.* In one embodiment, the system is used for the cultivation of the marine sponge *Dysidea avara* in a closed bioreactor system.

The present invention enables high-density culture of aquatic organisms, preferably filterfeeding aquatic organisms, in particular invertebrate filterfeeding aquatic organisms, most preferably sponges, such as *Dysidea avara, Chondrosia reniformis, Axinella polypoides* or *Crambe crambe.* The biomass hold-up (i.e. the ratio between animal volume and water volume) in enclosure C of the systems is at least about 0.001, preferably, the biomass hold-up is at least about 0.01 and most preferably, the biomass hold-up is at least about 0.1. The bioreactor system according to the present invention provides for a culture system, wherein the culture may be maintained in stable form, i.e., without disease or bacterial over growth, during a long period of time. This period may be at least about 6 weeks, preferably the period is at least about 3 months, about 6 months or about 9 months, more preferably, the period is at least about 10, 11 or 12 months, most preferably the period is at least about 16, 18, 20 or 24 months.

During this period, part of the total amount of the cultured organisms may be harvested, for example for investigation or extraction of natural product.

The bioreactor system according to the invention allows for enhanced animal growth compared to existing systems. In one embodiment, animals grew at least about 5% per week (increase in sponge biomass). Preferably, animal growth is enhanced at least about 8%, 10% or 15% per week.

In yet another aspect, the invention relates to the use of a bioreactor system according to the invention for the production of a natural compound from an aquatic organism. The term "a natural compound" refers to a compound that is a primary or secondary metabolite from the aquatic organism. Examples include eicosapentaenoic acid (EPA), which is a primary metabolite of several microorganisms, and avarol, which is a secondary metabolite from the marine sponge *Dysidea avara.*

The skilled person will understand that the system of the invention may also be used to produce products which are normally not produced by the aquatic organisms, but which the organisms produce upon genetic modification. The metabolite may be used in industry, preferably in the food, feed, paper and pulp or textile or bulk chemical industry, but more preferably in the pharmaceutical industry. The aquatic organism is preferably a filterfeeding organism, more preferably a filter feeding animal, most preferably a sponge, in particular a Mediterranean sponge, such as the ones mentioned before.

In yet another aspect, the present invention relates to the use of aged organic material to feed filterfeeding aquatic organisms.

### Short description of the Figures

**Figure 1** shows a half open bioreactor system for the culture of filterfeeding aquatic organisms, without (1A) and with additional ageing enclosure (1B). The figures show an embodiment of a bioreactor system with one enclosure A (enrichment). Alternatively, multiple enclosures A may be operated in parallel. Arrows indicate directions of water flows.
**Figure 2** shows a closed bioreactor system for the culture of filterfeeding aquatic organisms, without (2A) and with additional ageing enclosure (2B). The bioreactor system may as well be operated using a single enclosure A or using more than two parallel enclosures A. The figures show an embodiment with two enclosures (enrichment) run in parallel. Arrows indicate directions of water flows.

### EXAMPLES

### Example 1

The marine sponge *Dysidea avara* was cultured in a closed circuit culture system, consisting of an enclosure C, in which the animals were cultured, and an enclosure A, in which enrichment of the water was effected. Both enclosures were filled with artificial seawater. Artificial seawater with a salinity of 35 ‰ was made by adding artificial sea salt (Instant Ocean Reef Crystals) to demineralised water. Cuttings of *Dysidea avara* were tied onto perspex slides using nylon threads. These explants were cultured in a 1500 l rectangular tank (enclosure C) equipped with a DYMICO reactor for the maintenance of the water quality. Water from this tank was continuously pumped into a 100 l glass aquarium (enclosure A) by a peristaltic pump at a rate of 12 l/day. The aquarium was equipped with a sparger to create airlift mixing (compressed air). The positioning of this sparger in the aquarium was similar to the position of the sparger in enclosure C in Figure 1.

Unselective enrichment of the microbial population took place in the 1001 aquarium by continuously adding concentrated solutions of NaH₂PO₄ 2H₂O (0.5 mM) and KNO₃ (10 mM) into the aquarium at a rate of 120 ml/day, using a peristaltic pump, and by providing artificial daylight to the aquarium for 24 h/day. In addition, 20 ml of a concentrated trace element solution (1.9 g/l FeCl₃, 4.36 g/l Na₂EDTA, 0.01 g/l CuSO₄, 0.022 g/l ZnSO₄ 7H₂O, 0.01 g/l CoCl₂ 6H₂O, 0.18 g/l MnCl₂ 4H₂O, 0.006 g/l Na₂Mo₄ 2H₂O) was added to the aquarium every week. Prior to the experiment, the aquarium had been inoculated with a natural water sample from the North Sea. This sample had been spiked with nutrients (100 µmol NaH₂PO₄ 2H₂O, 1 mmol KNO₃ and 0.5 ml of the trace element solution described above per litre of sample) and was grown in batch for a period of one week (under an illumination regime of 24h/day) before it was added to the aquarium. In the aquarium, the inoculum was diluted with water from enclosure C and extra nutrients were added, resulting in end concentrations in the aquarium of 1000 µM nitrate and 50 µM phosphate. In addition, 20 ml of the trace element solution was added. The microbial population in the aquarium was allowed to grow for one week before the sponge culture experiment was started by switching on the pumps. The effluent of the aquarium was led into enclosure C via an overflow (gravity). Sometimes, when the material in the aquarium appeared aggregated, a stirred filter was positioned between the aquarium and enclosure C.

Silicate and iron, two elements that have been reported to be beneficial to sponges (Le Pennec et al. 2003), were added to enclosure C. Silicate was added as Na₂SiO₃ x 9H₂O (end concentration 45 µM). Iron was added as Ferric citrate (end concentration 10 µM).

The changes in sponge biomass were measured as changes in underwater weight, following the procedures described by Osinga et al. (2001). Under the conditions described above, the sponges grew with 5 % per week, which is faster than the growth of the same species in the MariBattery.

### References

Barthel D., Theede, H., 1986. A new method for the culture of marine sponges and its application for experimental studies. Ophelia 25: 75-82.

Corre, V.L., Janeo, R., C.M. Caipang, C.M., Calpe, AT., 2000. Use ofprobiotics and reservoirs with "green water". Aquaculture Asia V 2: 34-38.

Duckworth, A.R., Battershill, C.N., Schiel, D.R., Bergquist, P.R., 1999. Farming of sponges for the production of bioactive metabolites. Memoirs of the Queensland Museum 44: 155-159.

Le Pennec, G., Perovic, S., Ammar, M.S.A., Grebenjuk, V.A., Steffen, R., Brümmer, F., Müller, W.E.G., 2003. Cultivation of primmorphs from the marine sponge Suberites domuncula: morphogenetic potential of silicon and iron. J. Biotechnol. 100: 93-108.

Osinga, R., De Vries, K.A., Lewis, W.E., Van Raaphorst, W., Dijkhuizen, L., Van Duyl, F.C., 1997. Aerobic degradation of phytoplankton debris dominated by *Phaeocystis* sp. in different physiological stages of growth. Aquat. Microb. Ecol. 12: 11-19.

Osinga, R., Kleijn, R., Groenendijk, E., Niesink, P., Tramper, J., Wijffels, R.H., 2001. Development of in vivo sponge cultures: particle feeding by the tropical sponge Pseudosuberites andrewsi. Mar. Biotechnol.3: 544-554.

Osinga, R., Belarbi, E.H., Molina Grima, E., Tramper J., Wijffels, R.H., 2003. Progress towards a controlled culture of the marine sponge *Pseudosuberites andrewsi* in a bioreactor. J. Biotechnol. 100: 141-146.

Pronzato, R., Bavestrello, G., Cerrano, C., Magnino, G., Manconi, R., Pantelis, J., Sara, N., Sidri, M., 1999. Sponge farming in the Mediterranean Sea: new perspectives. Memoirs of the Queensland Museum 44, 485-491.

## Claims

1. Bioreactor system for the cultivation of aquatic organisms, preferably filterfeeding aquatic organisms, using enriched water, wherein the system comprises separate enclosures for the enrichment of the water and the cultivation of the organisms.

2. Bioreactor system according to claim 1 comprising
(i) one or more enclosures A, preferably in parallel, wherein the enrichment of the water is effected and
(ii) an enclosure C which contains the organisms and which is connected to enclosure A

3. Bioreactor system according to claim 2 wherein the enclosure C is connected to enclosure(s) A by an enclosure B, in which enclosure B the ageing of the enriched water from enclosure(s) A takes place.

4. Bioreactor system according to claim 3, wherein the enriched water from enclosure A is subjected to a pre-ageing treatment before it enters enclosure B.

5. Bioreactor system according to claims 2-4 wherein enclosures A and C are connected to an external water mass, preferably to an external water mass of fresh or salt water.

6. Bioreactor system according to claims 1-5 wherein the enriched water is artificial water.

7. Bioreactor system according to claims 1-6 wherein measures are taken to reduce the size of aggregates that are formed in any one of the enclosures, preferably by using stirred filters.

8. Method for the cultivation of aquatic organisms comprising cultivating the aquatic organisms, preferably filterfeeding aquatic organisms, in a bioreactor system according to claims 1-7.

9. Method according to claim 8 wherein the aquatic organisms are filterfeeding aquatic organisms, more preferably sponges, most preferably Mediterranean sponges.

10. The use of aged organic material to feed aquatic organisms, preferably filterfeeding aquatic organisms.

11. The use of a bioreactor system according to claims 1-7 or a method according to claim 8 or 9 for the production of a natural compound from an aquatic organism, preferably a filterfeeding aquatic organism.

12. Method for cultivating an aquatic organism, preferably a filterfeeding aquatic organism, in high density, the method comprising cultivating the organism using enriched water in a bioreactor system which comprises separate enclosures for the enrichment of the water and the cultivation of the organism.
